# EUROPEAN PATENT APPLICATION

(11) **EP 4 274 012 A2**
(43) Date of publication of application: **08.11.2023**
(21) Application number: 23161814.1
(22) Date of filing: 14.03.2023
(51) Int. Cl.: H01M 50/227, H01M 50/231, H01M 50/24, H01M 50/278, H01M 50/282, H01M 50/392

(54) **POWER STORAGE DEVICE**

(30) Priority: 02.05.2022 JP 2022075886
(71) Applicant: TOYOTA JIDOSHA KABUSHIKI KAISHA, Aichi-Ken 471-8571 (JP)
(72) Inventor: NAKAYAMA, Hiroyuki, Toyota-shi, 471-8571 (JP)
(74) Representative: D Young & Co LLP

(57) **Abstract**

A power storage device (1) includes a stack (10) in which a plurality of battery cells (11) is stacked together, a housing (20) that houses the stack (10), and an insulating sheet (31) disposed between a ceiling surface (24) of the housing (20) and the stack (10). The ceiling surface (24) includes an exposed area (35) that is not covered with the insulating sheet (31). The insulating sheet (31) includes a projecting portion (34) projecting downward. The projecting portion (34) is disposed between the stack (10) and the exposed area (35) in plan view.

## Description

### BACKGROUND OF THE INVENTION

### 1. Field of the Invention

The present disclosure relates to a power storage device.

### 2. Description of Related Art

Japanese Unexamined Patent Application Publication No. 2013-229266 (JP 2013-229266 A) discloses a battery module as a power storage device. The battery module includes stacked batteries. A housing that surrounds the batteries is made of a pair of end plates and a pair of bus bar modules.

### SUMMARY OF THE INVENTION

When an electrolytic solution leaks from the batteries, an electrode tab and the housing may be short-circuited through the electrolytic solution, and the housing may have a potential. When the housings of the adjacent battery modules constituting a battery assembly have potentials, a circuit may be created and heat may be generated. In addition, workability may deteriorate when handling the housing having a potential.

The present disclosure proposes a power storage device capable of improving the insulation of a housing that houses battery cells.

According to the present disclosure, a power storage device is proposed that includes a stack in which a plurality of battery cells is stacked together, a housing that houses the stack, and an insulating sheet disposed between a ceiling surface of the housing and the stack. The ceiling surface includes an exposed area that is not covered with the insulating sheet. The insulating sheet includes a projecting portion projecting downward. The projecting portion is disposed between the stack and the exposed area in plan view.

Even when a conductive liquid in the housing flows along the insulating sheet toward the exposed area, the liquid is guided by the projecting portion and falls downward when the liquid reaches the projecting portion. Since the liquid is suppressed from reaching the exposed area by the projecting portion, it is possible to suppress short-circuiting of the stack and the housing. Accordingly, the insulation of the housing that houses the battery cells can be improved.

In the power storage device described above, the projecting portion may have an extending rib shape. As a result, it is possible to surely suppress the conductive liquid from reaching the exposed area.

In the power storage device described above, the insulating sheet may include a bent portion made by bending a peripheral edge of the insulating sheet, and the bent portion may constitute the projecting portion. In this way, the projecting portion will be easily manufactured. In addition, it is possible to surely provide the projecting portion with a rib shape.

In the power storage device described above, the stack may include a connecting portion that connects two of the battery cells, and the projecting portion may be disposed between the connecting portion and the exposed area in plan view. Since it is possible to suppress the conductive liquid from falling from the projecting portion to the connecting portion, it is possible to suppress short-circuiting of connecting portions adjacent to each other in a stacking direction of the battery cells.

In the power storage device described above, the housing may include a side wall constituting a side surface of the housing and a top wall constituting an upper surface of the housing, a lower surface of the top wall may constitute the ceiling surface, and the housing may further include a welded portion where the side wall and the top wall are welded together, and the exposed area may be provided on a peripheral edge portion of the top wall. Since the insulating sheet is not present at the welded portion, welding defects can be suppressed.

With the power storage device of the present disclosure, the insulation of the housing that houses the battery cells can be improved.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a sectional view showing a schematic configuration of a power storage device according to an embodiment;
FIG. 2 is an enlarged perspective view showing the vicinity of a welded portion shown in FIG. 1; and
FIG. 3 is a flowchart showing a method for manufacturing the power storage device.

### DETAILED DESCRIPTION OF EMBODIMENTS

An embodiment will be described below based on the drawings. In the following description, the same reference signs are given to the same parts. Their names and functions are also the same. Therefore, detailed description of the same parts will not be repeated.

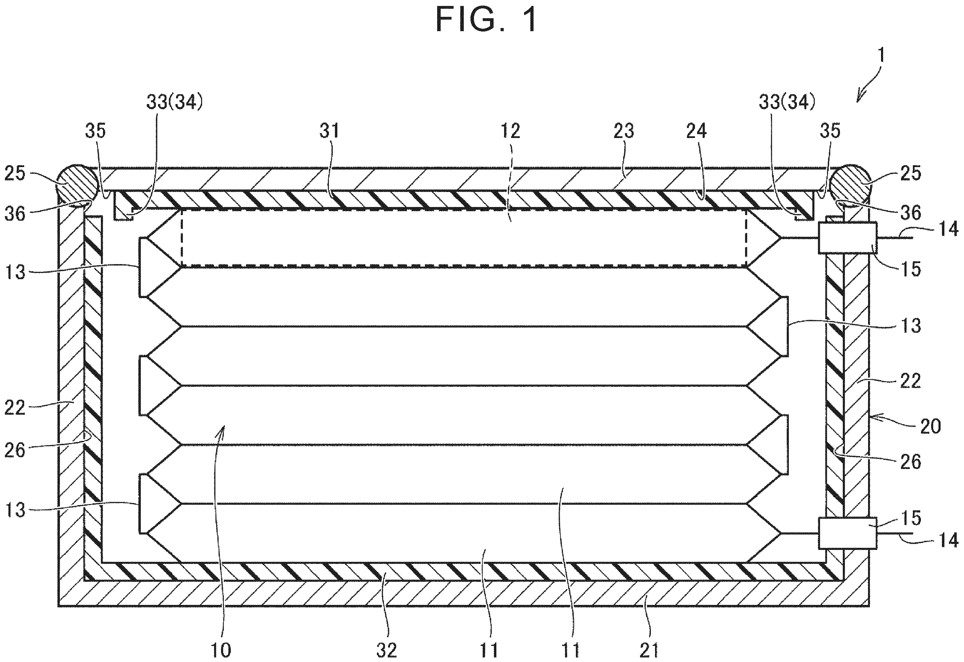

FIG. 1 is a sectional view showing a schematic configuration of a power storage device 1 according to the embodiment. The power storage device 1 is, for example, mounted on a vehicle for use. Examples of the vehicle include hybrid electric vehicles, plug-in hybrid electric vehicles, battery electric vehicles, and fuel cell electric vehicles. A battery assembly that is an assembly in which the power storage devices 1 are arranged side by side is mounted on the vehicle.

The power storage device 1 shown in FIG. 1 includes a stack 10 in which a plurality of battery cells 11 is stacked together in a stacking direction. The stacking direction of the battery cells 11 is an up-down direction. Each of the battery cells 11 is a secondary battery such as a lithium ion battery or a nickel metal hydride battery. An electrode body 12 is housed inside the exterior body of each battery cell 11. The electrode body 12 is made, for example, by stacking a positive electrode and a negative electrode with a separator interposed therebetween and then winding them into a cylindrical shape. The electrode body is not limited to that of a wound type, and may be of a stacked type. The electrode body 12 is immersed in an electrolytic solution. The electrolytic solution is sealed inside the exterior body of the battery cell 11.

The stack 10 includes connecting portions 13 that electrically connect two battery cells 11 adjacent to each other in the stacking direction. When the two battery cells 11 are connected in series, a positive electrode terminal of one of the two battery cells 11 and a negative electrode terminal of the other of the two battery cells 11 are electrically connected. The connecting portion 13 is welded to, for example, the positive electrode terminal and the negative electrode terminal.

The stack 10 includes a pair of general terminals 14, 14. One of the general terminals 14 is a positive electrode-side output terminal of the stack 10 and the other of the general terminals 14 is a negative electrode-side output terminal of the stack 10. The battery cells 11 provided with the general terminals 14 are arranged furthest apart in the stacking direction. The general terminals 14 are arranged so as to pass through a housing 20. Gaskets 15 are provided to locations where the general terminals 14 pass through the housing 20. The gaskets 15 electrically insulate the general terminals 14 from the housing 20, and seal through holes made in the housing 20 for the general terminals 14 to pass through, thereby obstructing entry of external moisture to the housing 20.

The power storage device 1 includes the housing 20 that houses the stack 10. The housing 20 includes a bottom wall 21, side walls 22, and a top wall 23. The bottom wall 21, the side walls 22, and the top wall 23 are made of a conductive material. The bottom wall 21, the side walls 22, and the top wall 23 are made of, for example, a metal material as represented by an aluminum alloy.

The bottom wall 21 is disposed below the stack 10. The bottom wall 21 constitutes a lower surface of the housing 20. The side walls 22 cover the stack 10 from the sides. The side walls 22 constitute side surfaces of the housing 20. The side walls 22 include inner wall surfaces 26. The inner wall surfaces 26 face the internal space of the housing 20. The inner wall surfaces 26 face the stack 10. In the housing 20 shown in FIG. 1, the bottom wall 21 and the side walls 22 are made integrally. A housing case that opens upward is made by the bottom wall 21 and the side walls 22. The stack 10 is housed in the housing case.

The top wall 23 is disposed above the stack 10. The top wall 23 constitutes an upper surface of the housing 20. The top wall 23 is made as a cover that closes the opening of the housing case made by the bottom wall 21 and the side walls 22. The top wall 23 covers the stack 10 from above. A lower surface of the top wall 23 constitutes a ceiling surface 24 of the housing 20. The ceiling surface 24 faces the internal space of the housing 20. The ceiling surface 24 faces downward. The ceiling surface 24 faces the stack 10.

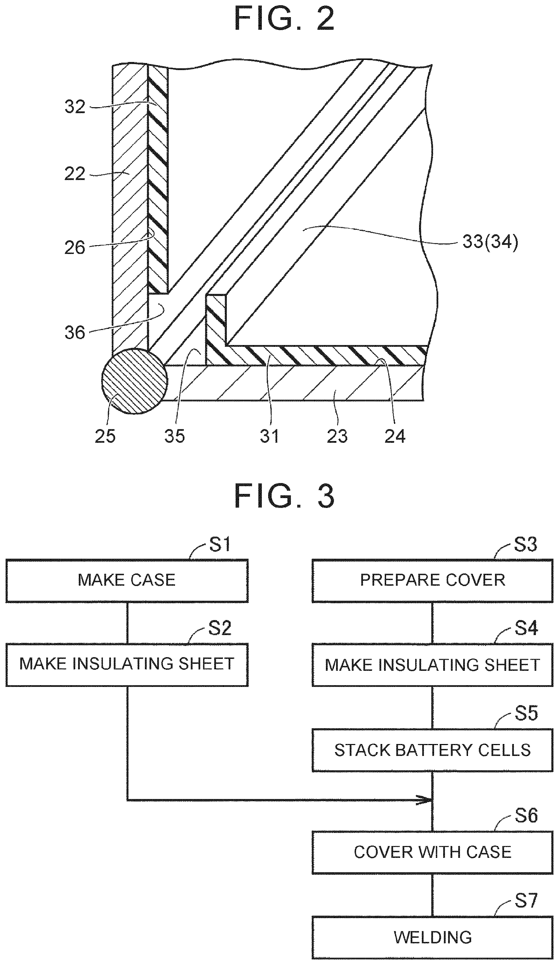

Upper edges of the side walls 22 and peripheral edges of the top wall 23 are joined by welding. The housing 20 includes welded portions 25 where the side walls 22 and the top wall 23 are welded together. The housing case is sealed by welding the top wall 23 to the housing case. FIG. 2 is an enlarged perspective view showing the vicinity of one of the welded portions 25 shown in FIG. 1. FIG. 2 shows the vicinity of a joint portion between one of the side walls 22 and the top wall 23 of the housing 20 that is vertically inverted. The stack 10 is not shown in FIG. 2 for simplification. The welded portion 25 extends along the upper edge of the side wall 22 and extends along the peripheral edge of the top wall 23.

The power storage device 1 further includes insulating sheets 31, 32. The insulating sheets 31, 32 are interposed between the stack 10 and inner surfaces of the housing 20 to electrically insulate the stack 10 from the housing 20. The insulating sheets 31, 32 are made of an electrically insulating material as represented by a resin material. Typically, the insulating sheets 31, 32 are made of an electrolytic-solution-resistant material, such as polypropylene, polyamide, and polytetrafluoroethylene. The insulating sheets 31, 32 are made of a material that is chemically stable against a solvent used in the electrolytic solution, such as dimethyl carbonate.

The insulating sheet 31 is disposed between the ceiling surface 24 of the housing 20 and the stack 10. The insulating sheet 31 partially covers the ceiling surface 24 of the housing 20. The insulating sheet 32 covers a floor surface of the housing 20 and partially covers the inner wall surfaces 26 of the housing 20. By integrally covering the entire bottom surface of the housing 20 and the inner wall surfaces 26 with the insulating sheet 32, the insulation of the housing 20 is improved. The insulating sheets 31, 32 may be made by attaching a sheet-shaped resin material to the inner surfaces of the housing 20 with an adhesive. The insulating sheets 31, 32 may be made by coating the inner surfaces of the housing 20 with a resin material.

The ceiling surface 24 includes exposed areas 35 that are not covered with the insulating sheet 31. The inner wall surfaces 26 include exposed areas 36 that are not covered with the insulating sheet 32. Specifically, the exposed areas 35 are provided on peripheral edge portions of the top wall 23. The exposed areas 36 are provided on upper edge portions of the side walls 22. As shown in FIG. 2, the exposed area 35 is provided along the peripheral edge of the top wall 23, and the exposed area 36 is provided along the upper edge of the side wall 22. The welded portion 25 that joins the upper edge of the side wall 22 and the peripheral edge of the top wall 23 is not covered with the insulating sheet 31 and is not covered with the insulating sheet 32.

The insulating sheet 31 includes projecting portions 34 projecting downward. As shown in FIG. 2, the projecting portion 34 has a rib shape extending along the peripheral edge of the top wall 23. The projecting portions 34 are arranged between the stack 10 of the battery cells 11 and the exposed areas 35 in plan view. The projecting portions 34 are arranged between the connecting portions 13 and the exposed areas 35 in plan view. The projecting portions 34 are arranged between the stack 10 of the battery cells 11 and the welded portions 25. The projecting portions 34 are arranged between the connecting portions 13 and the welded portions 25.

The insulating sheet 31 includes bent portions 33 made by bending peripheral edges of the insulating sheet 31 downward, and the projecting portions 34 are made up of the bent portions 33. The bent portions 33 are bent with respect to the ceiling surface 24 with a planar shape. The bent portions 33 are bent perpendicularly with respect to the ceiling surface 24.

The power storage device 1 of the embodiment described above includes the insulating sheet 31 as shown in FIG. 1. The insulating sheet 31 is disposed between the stack 10 of the battery cells 11 and the ceiling surface 24 of the housing 20 that houses the stack 10. The ceiling surface 24 of the housing 20 includes the exposed areas 35 that are not covered with the insulating sheet 31. The insulating sheet 31 includes projecting portions 34 projecting downward. The projecting portions 34 are arranged between the stack 10 and the exposed areas 35 in plan view.

In the housing 20, the ceiling surface 24 is covered with the insulating sheet 31, and the floor surface and the inner wall surfaces 26 are covered with the insulating sheet 32. The stack 10 of the battery cells 11 and the housing 20 can be electrically insulated by the insulating sheets 31, 32 in an appropriate manner. Conductive liquid such as the electrolytic solution leaking from the battery cell 11 and moisture entering from the outside may be present in the housing 20. Even in this case, short-circuiting between the connecting portion 13 that connects the battery cells 11 and the housing 20 through the liquid is suppressed.

When the side walls 22 and the top wall 23 of the housing 20 are joined by welding, the resin material attached to the inner surfaces of the housing 20 may obtain conductivity by carbonization due to welding heat and the insulation may deteriorate. Further, the resin may be dissolved and vaporized gas may be caught during welding to cause defects, such as perforation in a welded portion. The exposed areas 35 on which the insulating sheet 31 is not made are provided on the peripheral edge portions of the top wall 23, the exposed areas 36 on which the insulating sheet 32 is not made are provided on the upper edge portions of the side walls 22, and there is no resin material at the welded portions 25. As a result, even when the side walls 22 and the top wall 23 are joined by welding, the occurrence of welding defects can be suppressed.

The projecting portions 34 are arranged between the stack 10 of the battery cells 11 and the exposed areas 35 in which the inner surface of the housing 20 are not covered with the insulating sheet 31. Even if a conductive liquid such as an electrolytic solution flows along the insulating sheet 31 toward the exposed areas 35, the liquid is guided by the projecting portion 34 and falls downward when the liquid reaches the projecting portion 34. When the conductive liquid reaches the exposed area 35, the connecting portion 13 and the housing 20 may be short-circuited and the housing 20 may have a potential. However, the projecting portion 34 suppresses the liquid from reaching the exposed area 35. Therefore, short-circuiting of the connecting portion 13 and the housing 20 can be suppressed. Accordingly, the insulation of the housing 20 that houses the battery cells 11 can be improved.

As shown in FIG. 2, the projecting portion 34 may have an extending rib shape. The projecting portion 34 with a rib shape functions as a weir that keeps back the conductive liquid flowing along the insulating sheet 31 toward the exposed area 35. As a result, it is possible to surely suppress the conductive liquid from reaching the exposed area 35.

As shown in FIGS. 1 and 2, the insulating sheet 31 may include the bent portion 33 in which the peripheral edge of the insulating sheet 31 is bent, and the projecting portion 34 may be made up by the bent portion 33. In this way, the projecting portion 34 will be easily manufactured. In addition, it is possible to surely provide the projecting portion 34 with a rib shape.

As shown in FIG. 1, the stack 10 may include the connecting portions 13 that connect the two battery cells 11, and the projecting portions 34 may be arranged between the connecting portions 13 and the exposed areas 35 in plan view. By arranging the projecting portions 34 in this way, it is possible to suppress the conductive liquid from falling from the projecting portion 34 to the connecting portion 13, and to suppress short-circuiting of the connecting portions 13 adj acent to each other in the stacking direction of the battery cells 11.

As shown in FIGS. 1 and 2, the housing 20 may include the welded portions 25 in which the side walls 22 constituting the side surfaces of the housing 20 and the top wall 23 constituting the upper surface of the housing 20 are welded together, and may be provided with the exposed areas 35 on the peripheral edge portions of the top wall 23. A configuration in which the insulating sheet 31 is not present at the welded portions 25 is realized, thereby welding defects can be more surely suppressed.

In the description so far, an example in which the exposed areas 35 are made at the welded portions 25 to suppress welding defects has been described. When there is a location, other than the welded portions 25, in which the inner surface of the housing 20 is not covered with the insulating sheets 31, 32, it is possible to suppress the conductive liquid from reaching the location by providing a structure that causes the liquid to fall downward before the location. Therefore, the effect of improving the insulation of the housing 20 can be similarly obtained.

The battery cell 11 is not limited to a liquid battery in which an electrolytic solution is sealed inside. Even when the battery cell 11 is an all-solid-state battery, the conductive liquid may be present inside the housing 20, due to dew condensation inside the housing 20 or unintentional entry of moisture from the outside. Even in this case, by arranging the projecting portions 34 between the battery cell 11 and the exposed areas 35, it is possible to suppress the conductive liquid from reaching the exposed areas 35, thereby improving the insulation of the housing 20.

The stacking direction of the battery cells 11 in the stack 10 is not limited to the up-down direction. The insulating sheet 31 of the embodiment may be applied to the ceiling surface 24 of the housing 20 that houses the stack 10 in which the battery cells 11 are stacked in a horizontal direction.

The projecting portion 34 is not limited to the example in which the projecting portion 34 is made by bending the peripheral edge of the insulating sheet 31. When the insulating sheet 31 has a projecting shape projecting downward at a peripheral edge portion, the projecting shape can guide the liquid to fall downward. The projecting portion 34 need not have a rib shape. For example, columnar projecting portions 34 may be arranged with intervals along the peripheral edge of the insulating sheet 31.

Next, an outline of a method for manufacturing the power storage device 1 of the embodiment will be described. FIG. 3 is a flowchart showing the method for manufacturing the power storage device 1.

In step S1, the housing case is made. By preparing a plate-shaped member constituting the bottom wall 21 and plate-shaped members constituting the side walls 22 shown in FIG. 1 and joining these plate-shaped members, a box-shaped housing case with one side opened can be made.

In step S2, the insulating sheet 32 is made on the inner surfaces of the housing case. The insulating sheet 32 may be made by attaching a sheet-shaped resin material to the inner surfaces of the housing case with an adhesive, or the insulating sheet 32 may be made by coating the inner surfaces of the housing case with a resin material. In edge portions of the opening of the housing case, the exposed areas 36 in which the inner surfaces of the housing case are not covered with the insulating sheet 32 are made.

In parallel with steps S1 and S2, the cover is prepared in step S3. A plate-shaped member that constitutes the top wall 23 shown in FIG. 1 is prepared.

In step S4, the insulating sheet 31 is made on a surface of the cover that constitutes the ceiling surface 24. The insulating sheet 31 may be made by attaching a sheet-shaped resin material to the surface of the cover with an adhesive, or the insulating sheet 31 may be made by coating the surface of the cover with a resin material. The bent portions 33 are made by bending the peripheral edges of the insulating sheet 31 that has been made. The exposed areas 35 that are not covered with the insulating sheet 31 are made on peripheral edge portions of the cover. By bending the insulating sheet 31 to make the projecting portions 34, positioning of the projecting portions 34 with respect to the cover can be easily performed.

In step S5, the battery cells 11 are stacked on the cover disposed so that the surface on which the insulating sheet 31 is made faces upward. Terminals of the two adjacent battery cells 11 are electrically connected to each other at the connecting portion 13, whereby the stack 10 is made.

In step S6, the stack 10 of the battery cells 11 is covered with the housing case. In step S7, the opening of the housing case is sealed by welding the cover to the housing case, whereby the housing 20 is made. The general terminals 14 are arranged so as to pass through the side walls 22 of the housing 20 and to be pulled out to the outside, and the gaskets 15 are provided around the general terminals 14. The housing 20 is vertically inverted, and the manufacturing of the power storage device 1 shown in FIG. 1 is completed.

It is possible to make the stack 10 by sequentially storing the battery cells 11 inside the housing case. In that case, however, there will be a space between the stack 10 and the inner surfaces of the housing case as a hollow space for a device to pass when the battery cells 11 are moved into the housing case. According to the manufacturing method shown in FIG. 3 in which the battery cells 11 are stacked on the cover to make the stack 10, the space between the stack 10 and the inner surfaces of the housing 20 can be reduced. Therefore, the power storage device 1 can be miniaturized, and the energy density can be improved.

The embodiment disclosed herein should be considered as illustrative and not restrictive in all respects. The scope of the present invention is shown by the claims rather than the above description, and is intended to include all modifications within the meaning and the scope equivalent to those of the claims.

## Claims

1. A power storage device (1) comprising:
a stack (10) in which a plurality of battery cells (11) is stacked together;
a housing (20) that houses the stack (10); and
an insulating sheet (31) disposed between a ceiling surface of the housing (20) and the stack (10), wherein
the ceiling surface includes an exposed area (35) that is not covered with the insulating sheet (31), and
the insulating sheet (31) includes a projecting portion (34) projecting downward, and the projecting portion (34) is disposed between the stack (10) and the exposed area (35) in plan view.

2. The power storage device according to claim 1, wherein the projecting portion (34) has an extending rib shape.

3. The power storage device according to claim 2, wherein:
the insulating sheet (31) includes a bent portion (33) made by bending a peripheral edge of the insulating sheet (31); and
the bent portion (33) constitutes the projecting portion (34).

4. The power storage device according to any one of claims 1 to 3, wherein:
the stack (10) includes a connecting portion (13) that connects two of the battery cells (11); and
the projecting portion (34) is disposed between the connecting portion (13) and the exposed area (35) in plan view.

5. The power storage device according to any one of claims 1 to 3, wherein:
the housing (20) includes a side wall (22) constituting a side surface of the housing (20) and a top wall (23) constituting an upper surface of the housing (20);
a lower surface of the top wall (23) constitutes the ceiling surface (24); and
the housing (20) further includes a welded portion (25) where the side wall (22) and the top wall (23) are welded together, and the exposed area (35) is provided on a peripheral edge portion of the top wall (23).

6. The power storage device according to claim 1, wherein the insulating sheet (31) are made of an electrolytic-solution-resistant material.

7. The power storage device according to claim 5, wherein:
the side wall (22) are covered with an insulating sheet (32) and includes an exposed area (36) that is not covered with the insulating sheet (32) covering the side wall (22); and
the exposed area (36) of the side wall (22) is provided along the upper edge of the side wall (22).
